# EUROPÄISCHE PATENTSCHRIFT

(11) **EP 2 598 352 B1**
(45) Veröffentlichungstag und Bekanntmachung des Hinweises auf die Patenterteilung: **06.04.2016**
(21) Anmeldenummer: 11766927.5
(22) Anmeldetag: 22.09.2011
(51) Int. Cl.: B60H 1/00, B61D 27/00

(54) **FAHRZEUG MIT EINER MIT HILFE EINES KÜHLLUFTMASSENSTROMS GEKÜHLTEN KOMPONENTE**
VEHICLE HAVING A COMPONENT COOLED BY MEANS OF A COOLING AIR MASS FLOW
VÉHICULE ÉQUIPÉ D'UN COMPOSANT REFROIDI AU MOYEN D'UN FLUX MASSIQUE D'AIR DE REFROIDISSEMENT

(30) Priorität: 27.09.2010 DE 102010041440
(43) Veröffentlichungstag der Anmeldung: 05.06.2013
(73) Patentinhaber: Siemens Aktiengesellschaft, 80333 München (DE)
(72) Erfinder: ELSENHEIMER, Frank, 44805 Bochum (DE); BRENDEL, Thomas, 40822 Mettmann (DE); RÜTER, Arnd, 47802 Krefeld (DE)
(86) Internationale Anmeldenummer: PCT/EP2011/066487
(87) Internationale Veröffentlichungsnummer: WO 2012/041758

(56) Entgegenhaltungen:
- EP-A1- 1 112 872
- EP-A1- 1 512 601
- DE-A1- 10 132 891
- DE-A1-102008 059 886
- DE-B3-102004 053 226
- US-A1- 2006 086 113
- US-A1- 2006 144 581

## Beschreibung

Die Erfindung bezieht sich auf ein Schienenfahrzeug mit wenigstens einer Komponente, welche zu Kühlzwecken von einem mit Hilfe mindestens einer Fördereinrichtung wie einem Lüfter oder Spoiler geförderten Kühlluftmassenstrom angeströmt ist, für den ein Nennwert vorbestimmt ist, der für eine angenommene maximale thermische Belastung der mindestens einen Komponente eine für deren Betrieb ausreichende Kühlwirkung bereit stellt, wobei die Komponente von einem zu kühlendem Umrichter oder Transformator des Fahrzeuges gebildet ist, sowie auf ein Verfahren zum Betrieb eines solchen Schienenfahrzeugs im Hinblick auf die Kühlfunktion. Ein solches Schienenfahrzeug und ein solches Verfahren sind beispielsweise aus der EP 1 512 601 A1 bekannt. Dort wird ein Verfahren zum Betrieb eines Lüfters für eine Klimaanlage vorgestellt, wobei eine Drehzahl des Lüfters bei Annäherung beispielsweise an einen Bahnhof vermindert wird, um eine Lärmbelästigung im Fahrzeug zu vermindern. Auch die EP 1 112 872 A1, die US 2006/086113 A1, die DE 10 2004 053 226 B3, die DE 10 2008 059 886 A1, die DE 101 32 891 A1 und die US 2006/144581 A1 betreffen die Einwirkung auf eine Drehzahl eines Lüfters, in erster Linie im Bereich von Personenkraftwagen.

Bei Schienenfahrzeugen wird eine abzuführende Wärmeleistung regelmäßig mit Hilfe von Kühlern an die Umgebungsluft abgegeben. Solche Kühler liegen beispielsweise als Wärmeübertrager bei einer Klimaanlage oder auch als Kühlrippen bei einem Traktionsumrichter eines Schienenfahrzeugs vor. Zu Kühlzwecken muss Umgebungsluft, die z. B. mit Hilfe des Lüfters angesaugt wird, in oder um den Kühler geführt und wieder an die Umgebung abgegeben werden.

Bei in Bewegung befindlichen Schienenfahrzeugen muss ein zu Kühlzwecken vorgesehener Luftmassenstrom der aus der Umgebung aufgenommenen Luft auf eine Geschwindigkeit beschleunigt werden, die sich aus einer Fahrgeschwindigkeit und einer Durchströmgeschwindigkeit bzw. Umströmgeschwindigkeit des Kühlers zusammensetzt. Dies führt im Fahrbetrieb des Schienenfahrzeugs zu einem zusätzlichen Fahrwiderstand, wobei mit zunehmender Fahrgeschwindigkeit eine für die Beschleunigung des Luftmassenstroms aufzubringende Traktionsleistung quadratisch ansteigt. Bei mit einem Kühler versehenen Komponenten von Schienenfahrzeugen aller Art, insbesondere Bussen, Lastkraftwagen und Schienenfahrzeugen, wird mittels eines Lüfters Luft aus der Umgebung des Schienenfahrzeugs angesaugt und durch bzw. um den Kühler geführt. In einem einfachsten Fall kann auf den Kühler verzichtet werden, so dass die Komponente selbst unmittelbar von der Kühlluft angeströmt wird.

Regelmäßig ist der Luftmassenstrom, der von dem Lüfter bestimmt wird, nicht regulierbar bzw. steuerbar. Er besitzt vielmehr einen Nennwert, der für eine angenommene maximale thermische Belastung der Komponente eine für deren Betrieb ausreichende Kühlwirkung bereit stellt. Bei einer solchen Vorgehensweise steigt die erforderliche Traktionsleistung mit zunehmender Fahrgeschwindigkeit stark an, da der durch die Beschleunigung des Luftmassenstroms entstehende Fahrwiderstand zusätzlich aufgebracht werden muss.

Ausgehend hiervon liegt der Erfindung die Aufgabe zugrunde, ein Schienenfahrzeug sowie ein Verfahren zu dessen Betrieb anzugeben, bei dem das Schienenfahrzeug in einem Betrieb der Komponente in ihrem zulässigen Temperaturbereich im Vergleich zum Stand der Technik weniger Leistung benötigt.

Dies Aufgabe wird hinsichtlich des Schienenfahrzeugs dadurch gelöst, dass eine Steuervorrichtung zum Steuern einer Stärke des Kühlluftmassenstroms vorgesehen und derart ausgebildet ist, dass der Kühlluftmassenstrom unterhalb einer vorbestimmten Fahrgeschwindigkeit seinen vorbestimmten Nennwert annimmt und unter Berücksichtigung thermischer Anforderungen der Komponente zumindest in einem oberen Fahrgeschwindigkeitsbereich so bemessen ist, dass eine Summe einer Aufnahmeleistung der wenigstens einen Komponente, der wenigstens einen Fördereinrichtung und eines auf die Förderung des Kühlluftmassenstroms entfallenden Anteils einer Traktionsleistung des Schienenfahrzeugs kleiner ist als eine Summe der Aufnahmeleistung der wenigstens einen Komponente, der wenigstens einen Fördereinrichtung und eines auf die Förderung des Kühlluftmassenstroms mit seinem vorbestimmten Nennwert entfallenden Anteils einer Traktionsleistung des Schienenfahrzeugs.

Statt des auf die Förderung des Kühlluftmassenstroms mit seinem vorbestimmten Nennwert entfallenden Anteils einer Traktionsleistung des Schienenfahrzeugs kann auch von einem durch die Förderung des Kühlluftmassenstroms mit seinem vorbestimmten Nennwert bedingten Anteil einer Traktionsleistung des Schienenfahrzeugs gesprochen werden.

Durch die Wirkungsweise der Steuervorrichtung, die zum Steuern des Kühlluftmassenstroms vorgesehen ist, ist es möglich, gegenüber dem Stand der Technik im Fahrbetrieb den Gesamtleistungsbedarf des Schienenfahrzeugs zu senken. Denn die Summe der Aufnahmeleistungen der Komponente, des Lüfters und der zusätzlich für die Beschleunigung des Kühlluftmassenstroms aufzubringenden Traktionsleistung bei Fahrt wird vermindert.

Dieser Vorteil zieht weitere Vorteile nach sich. Beispielsweise kann eine installierte Traktionsleistung des Schienenfahrzeugs reduziert werden, wodurch auch Herstellungskosten sinken können. Die sich ergebende geringere erforderliche Traktionsleistung kann außerdem zu geringerem Gewicht des Schienenfahrzeugs führen, was einen noch weiter reduzierten Leistungsbedarf zur Folge hat.

Bevorzugt wirkt die Steuervorrichtung auf eine Drehzahl wenigstens eines als Fördereinrichtung vorgesehenen Lüfters ein, so dass beispielsweise durch Vermindern dieser Drehzahl ein geringerer Kühlluftmassenstrom zum Kühlen der wenigstens einen Komponente verwendet wird.

In dem Fall, wenn mehrere Lüfter zum Fördern des Kühlluftmassenstroms vorgesehen sind, kann die Steuervorrichtung bei Bedarf wenigstens einen der Lüfter zu- oder abschalten. Auch durch diese Maßnahme wird ein Steuern des Kühlluftmassenstroms bewirkt.

In einer anderen Ausführungsform der Erfindung kann die Steuerung des Kühlluftmassenstroms auch dadurch herbeigeführt werden, dass Schaufelblätter des wenigstens einen Lüfters in ihrer Anstellung einstellbar sind und die Steuervorrichtung zum Einstellen des Kühlluftmassenstroms auf die Anstellung der Schaufelblätter einwirkt.

Eine weitere Alternative zum Steuern des Kühlluftmassenstroms kann darin bestehen, dass im Strömungsweg für den Kühlluftmassenstrom eine Drosselklappe vorgesehen ist und die Steuervorrichtung zur Einstellung des Kühlluftmassenstroms auf die Drosselklappe einwirkt.

Das Schienenfahrzeug kann mehrere zu kühlende Komponenten aufweisen, wobei dann die Steuervorrichtung für diese Mehrzahl an Komponenten eine jeweilige Größe des Kühlluftmassenstroms steuert.

Der Steuervorrichtung kann wenigstens eine Betriebsgröße des Schienenfahrzeugs signalisiert sein, die aus der Gruppe ausgewählt ist, die eine Fahrgeschwindigkeit, eine Leistungsaufnahme der wenigstens einen Komponente, eine thermische Belastung der wenigstens einen Komponente, eine Leistungsaufnahme des wenigstens einen Lüfters, eine Stärke des Kühlluftmassenstroms, eine Drehzahl des wenigstens einen Lüfters und eine Traktionsleistung des Schienenfahrzeugs umfasst. Diese Größen können einzeln, in Gruppen oder sämtlich verwendet werden, um der Steuervorrichtung geeignete Messwerte bereitzustellen, so dass sie den Kühlluftmassenstrom leistungssparend steuern kann.

In dem Fall, wenn mehrere Lüfter vorgesehen sind, kann der Steuervorrichtung bevorzugt eine Anzahl an zu- oder abgeschalteten Lüftern signalisiert sein.

Die für das Schienenfahrzeug insgesamt anfallende Betriebsleistung wird dann besonders gering, wenn die Steuervorrichtung derart ausgebildet ist, dass unter Berücksichtigung thermischer Anforderungen der wenigstens einen Komponente die Summe der Aufnahmeleistung der wenigstens einen Komponente, des wenigstens einen Lüfters und des auf die Förderung des Kühlluftmassenstroms entfallenden Anteils der Traktionsleistung des Schienenfahrzeugs minimiert ist. Vorteile der Erfindung ergeben sich jedoch auch dann, wenn die Steuervorrichtung den Kühlluftmassenstrom derart steuert, dass er unterhalb seines vorbestimmten Nennwertes bleibt.

Die Steuervorrichtung ist derart ausgebildet, dass der Kühlluftmassenstrom unterhalb einer vorbestimmten Fahrgeschwindigkeit seinen vorbestimmten Nennwert annimmt. Da mit abnehmender Fahrgeschwindigkeit des Schienenfahrzeugs die Leistungseinsparung abnimmt, kann es sinnvoll sein, unterhalb der vorbestimmten Geschwindigkeit keine Steuerung des Kühlluftmassenstroms vorzunehmen sondern stattdessen dessen Nennwert vorzusehen. Jedenfalls bei Stillstand des Schienenfahrzeugs sollte der Kühlluftmassenstrom seinen Nennwert annehmen, denn in diesem Betriebszustand verfügt die mindestens eine Komponente über ihren maximalen Wirkungsgrad.

Die wenigstens eine Komponente ist von einem Umrichter oder Transformator des Schienenfahrzeugs gebildet. Bevorzugt sind der Steuervorrichtung aktuelle Messwerte für den Kühlluftmassenstrom oder für eine diesen wiedergebende Größe zu Regelzwecken signalisiert, so dass die Steuervorrichtung als Regelvorrichtung arbeitet. Diese Vorgehensweise erlaubt eine genauere Einhaltung eines für eine bestimmte Fahrgeschwindigkeit als günstig angesehenen Kühlluftmassenstroms.

Zur Unterstützung der Förderung des Kühlluftmassenstroms können an einer Einsaugöffnung und/oder einer Ausblasöffnung für den Kühlluftmassenstrom aerodynamische Elemente vorgesehen sein. Dies gestattet es, dass vorhandene Lüfter reduziert werden können, was beispielsweise durch Abschalten oder Abregeln einzelner Lüfter geschehen kann.

Bevorzugt sind die aerodynamischen Elemente von Leitklappen gebildet, die in Längsrichtung des Schienenfahrzeugs hintereinander angeordnet sind. In dieser Weise lässt sich das Einströmen und Ausströmen des Kühlluftmassenstroms in effektiver Weise günstig beeinflussen.

Die Leitklappen können, bezogen auf das Schienenfahrzeug, jeweils um eine Querachse schenkbar angebracht sein. Dies ermöglicht eine Feinjustierung der Stellung der Leitklappen beispielsweise im Hinblick auf einen aktuell vorliegenden Kühlluftbedarf und den Luftwiderstand. Beispielsweise kann die Position der Leitklappen druckgeregelt sein, so dass ein Gegendruck für einen Ventilator neutral gehalten wird. Durch die Verstellbarkeit der Leitlappen ist es außerdem möglich, dass, abhängig von der jeweiligen Fahrtrichtung des Schienenfahrzeugs, eine Öffnung als Einsaug- oder als Ausblasöffnung dient. Dazu können dann die Leitklappen geeignet positioniert werden.

Es kann vorteilhaft sein, wenn die Einsaugöffnung und/oder die Ausblasöffnung mit einem Leitgitter für den Kühlluftmassenstrom ausgestattet sind. Dieses Leitgitter unterstützt das Ein- bzw. Ausblasen des Kühlluftmassenstroms an der jeweiligen Öffnung. In dem Fall, wenn entlang der Außenhaut des Schienens mehrere Leitklappen hintereinander angeordnet sind, kann ggf. auf das Leitgitter verzichtet werden.

Die oben angegebene Aufgabe wird hinsichtlich des Verfahrens gelöst durch ein Verfahren nach Patentanspruch 15.

Bevorzugte Ausführungsformen des Verfahrens ergeben sich aus den Patentansprüchen 16 bis 23.

Die Merkmale des Verfahrens und seine bevorzugten Ausführungsformen sind bereits oben anhand der Beschreibung des Schienenfahrzeugs erläutert worden.

Ausführungsbeispiele der Erfindung werden nachfolgend anhand der Zeichnung noch näher erläutert. Es zeigen:
- Figur 1: eine schematische Darstellung einer zu Kühlzwecken dienenden Anordnung innerhalb eines Schienenfahrzeugs,
- Figur 2: eine Längsschnittansicht einer Dachöffnung des Schienenfahrzeugs und
- Figur 3: eine Längsschnittansicht einer alternativ ausgebildeten Dachöffnung des Schienenfahrzeugs.

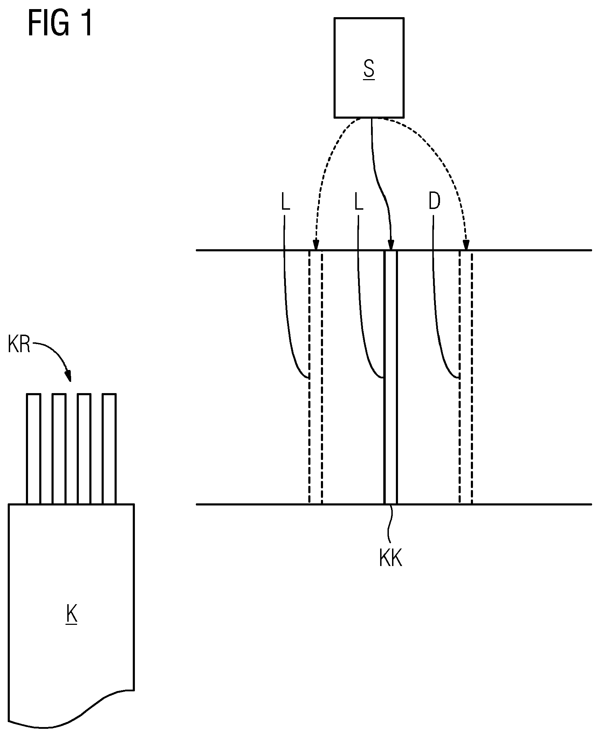

Figur 1 zeigt eine zu kühlende Komponente K eines Schienenfahrzeugs. Die Komponente K ist mit einem Kühler KR ausgestattet, der von aus einem Klimakanal KK stammender und von einem Lüfter L geförderten Luft zu Kühlzwecken angeströmt wird. Der anströmende Kühlluftmassenstrom bewirkt, dass die Komponente K im Betrieb des Schienenfahrzeugs unterhalb einer Temperatur gehalten wird, die einen störungsfreien Betrieb der Komponente K gewährleistet. Dazu ist für eine Steuervorrichtung S, welche den Kühlluftmassenstrom in verschiedener Weise zu steuern vermag, ein maximal zulässiger Temperaturwert für die Komponente K hinterlegt.

Die Steuervorrichtung S ist derart ausgebildet, dass der Kühlluftmassenstrom unter Berücksichtigung thermischer Anforderungen der Komponente K zumindest in einem oberen Fahrgeschwindigkeitsbereich so bemessen ist, dass eine Summe einer Aufnahmeleistung der Komponente K, des Lüfters L, der den Kühlluftmassenstrom fördert, und eines auf die Förderung des Kühlluftmassenstroms entfallenden Anteils einer Traktionsleistung des Schienenfahrzeugs kleiner ist als eine Summe der Aufnahmeleistungen der Komponente K und des Lüfters L und eines auf die Förderung des Kühlluftmassenstroms mit einem vorbestimmten Nennwert entfallenden Anteils einer Traktionsleistung des Schienenfahrzeugs. Dabei bedeutet der vorbestimmte Nennwert für den Kühlluftmassenstrom einen solchen Strom, der für eine angenommene maximale thermische Belastung der Komponente K eine für deren Betrieb ausreichende Kühlwirkung bereitstellt.

Im dargestellten Ausführungsbeispiel ist der Klimakanal KK mit dem Lüfter L ausgestattet und kann zusätzlich einen weiteren Lüfter L und/oder eine Drosselklappe D aufweisen (gestrichelt dargestellt). In einer Ausführungsform der Erfindung wirkt die Steuervorrichtung S auf denjenigen Lüfter L ein, der mit durchgezogener Pfeillinie in der Figur mit der Steuervorrichtung S verbunden ist. Die Steuervorrichtung S kann eine Drehzahl des Lüfters L zur Verminderung des Kühlluftmassenstroms absenken, so dass der auf die Förderung des Kühlluftmassenstroms entfallende Anteil der Traktionsleistung des Schienenfahrzeugs absinkt. Alternativ dazu ist es auch möglich, dass der Lüfter L in ihrer Anstellung einstellbare Schaufelblätter aufweist und die Steuervorrichtung S zum Einstellen des Kühlluftmassenstroms auf die Anstellung der Schaufelblätter einwirkt. Zur Regelung des Kühlluftmassenstroms wird der Steuervorrichtung S dessen aktueller Wert signalisiert.

Eine weitere Möglichkeit zur Steuerung des Kühlluftmassenstroms ist die Einwirkung auf die Drosselklappe D, die per gestrichelter Pfeillinie in der Figur mit der Steuervorrichtung S in Verbindung steht. In diesem Fall kann eine Drehzahl der Lüfter L beibehalten werden, während der Kühlluftmassenstrom von einem Öffnungsgrad der Drosselklappe D bestimmt wird.

Eine weitere Möglichkeit zur Steuerung des Kühlluftmassenstroms besteht im dargestellten Ausführungsbeispiel darin, dass die Steuervorrichtung S auf beide dargestellte Lüfter L derart einwirkt, dass einer der beiden Lüfter L abgeschaltet wird, sofern der sich dann ergebende geringere Kühlluftmassenstrom gewährleistet, dass eine maximal zulässige Temperatur der Komponente K nicht erreicht wird.

Die Steuervorrichtung S erhält zur Steuerung des Kühlluftmassenstroms eine Mehrzahl an Eingangswerten für folgende Größen: Fahrgeschwindigkeit, Leistungsaufnahme der Komponente K, thermische Belastung der Komponente K, Leistungsaufnahme des oder der Lüfter L, Stärke des Kühlluftmassenstroms, Drehzahl des oder der Lüfter L und Traktionsleistung des Schienenfahrzeugs. Sofern gewährleistet ist, dass die maximal zulässige thermische Belastung der Komponente K nicht überschritten wird, kann auf eine oder mehrere der vorgenannten Größen verzichtet werden. Die Steuervorrichtung S minimiert im Idealfall für jede Fahrgeschwindigkeit des Schienenfahrzeugs dessen Leistungsbedarf.

Bei dem Ausführungsbeispiel, das mehrere Lüfter L vorsieht, kann der Steuervorrichtung S zusätzlich eine Anzahl der zu- oder abgeschalteten Lüfter L signalisiert sein. Wenn beispielsweise im dargestellten Ausführungsbeispiel nur einer der beiden Lüfter L in Betrieb ist, jedoch die Temperatur der Komponente K sich dem unzulässigen Temperaturbereich nähert, wird die Steuervorrichtung S den zweiten Lüfter L zuschalten.

Bei Ausführungsbeispielen der Erfindung, bei denen der Steuervorrichtung S Informationen über die Fahrgeschwindigkeit des Schienenfahrzeugs vermittelt werden, ist die Steuervorrichtung S derart ausgelegt, dass im hohen Geschwindigkeitsbereich eine Reduzierung des Kühlluftmassenstroms vorgenommen wird, da gerade in diesem Geschwindigkeitsbereich die Leistungseinsparungen am größten sind. Unterhalb einer vorbestimmten Fahrgeschwindigkeit kann demgegenüber der Kühlluftmassenstrom seinen Nennwert annehmen.

Als Komponente K des Schienenfahrzeugs kommen ein Umrichter oder Transformator in Frage, bei dem es sich um eine elektrische Vorrichtung des Schienenfahrzeugs handelt und der als Kühler typischer Weise mit einem Kühlgerippe ausgestattet ist. Es ist ersichtlich, dass die in der Figur dargestellte Anordnung um weitere Komponenten des Schienenfahrzeugs erweitert werden kann, wobei dann die Steuereinrichtung S auf die thermische Belastbarkeit der weiteren Komponenten zu berücksichtigen hätte.

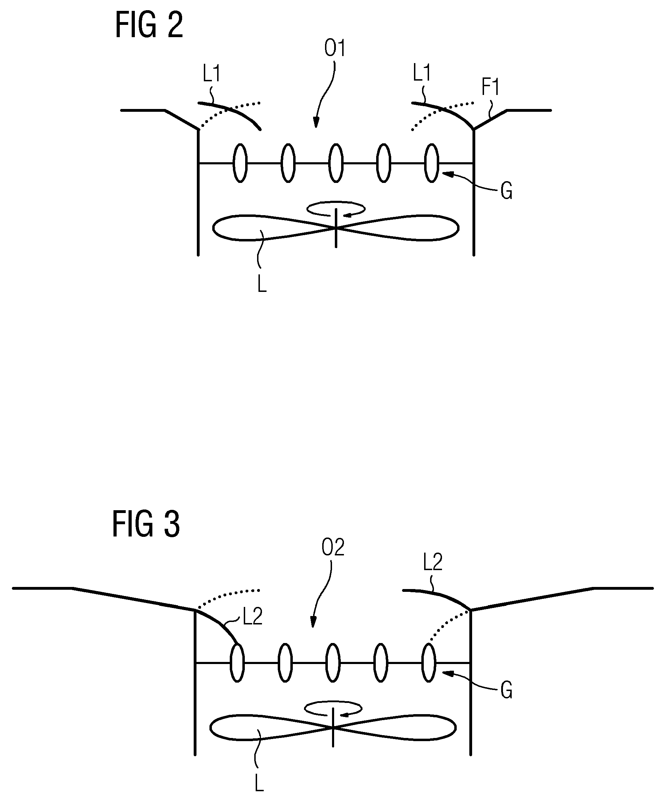

Aus Figur 2 geht eine erste Ausführungsform einer als Einsaug- oder Auslassöffnung wirkenden Dachöffnung O1 hervor. Vorgesehene Leitklappen L1, die jeweils am Rand der Öffnung 01 in Längsrichtung des Schienenfahrzeugs hintereinander angeordnet sind, lassen sich um eine, bezogen auf das Schienenfahrzeug, quer verlaufende Achse verschwenken, so dass die Öffnung in ihrer Funktion an die Fahrtrichtung des Schienenfahrzeugs angepasst werden kann. Die Leitklappen L1 können sich innerhalb einer Fahrzeugkontur bewegen, da sie zurückgesetzt und platzsparend eingebaut sind. Eine am Rand der Öffnung Olvorgesehene Fase F1 kann beispielsweise 30° betragen. Für die Leitklappen L1 sind Neutral- und Zwischenstellungen möglich, um eine optimale Anpassung an einen aktuellen Kühlluftbedarf und den Luftwiderstand zu ermöglichen. Die in Figur 2 durchgehend dargestellte Leitklappenstellung entspricht für eine Fahrtrichtung nach rechts einem Auslass und für eine Fahrtrichtung nach links einem Einlass. Demgegenüber gehört die gestrichelte Linie für eine Auslasswirkung zu einer Fahrtrichtung nach links und für eine Einlasswirkung für eine Fahrtrichtung nach rechts. Die Leitklappen L1 stehen jeweils parallel zueinander.

Im Stand des Schienenfahrzeugs ist die in der Figur 2 linke Leitklappe L1 entsprechend der durchgezogenen Linie und die rechte Luftklappe L1 entsprechend der gestrichelten Linie angeordnet.

In einem erweiterten Ausführungsbeispiel sind zwischen den beiden dargestellten Leitklappen L1 weitere Leitklappen vorgesehen, so dass beispielsweise auch ein Verschließen der Öffnung O1 möglich ist. Bei derart vielen Leitklappen L kann ggf. davon abgesehen werden, ein in Figur 2 dargestelltes Leitgitter G im Öffnungsbereich vorzusehen, das ebenfalls die Aufgabe hat, den Kühlluftstrom günstig zu leiten.

Bei dem in Figur 3 dargestellten Ausführungsbeispiel für eine Gestaltung einer Dachöffnung 02 des Schienenfahrzeugs sind ebenfalls zwei Leitbleche L2 jeweils entlang des Schienenfahrzeugs im Randbereich der Dachöffnung 02 vorgesehen. Während bei dem Ausführungsbeispiel nach Figur 2 die Schwenkachsen für die Leitklappen L etwas einwärts vom Rand der Öffnung O1 liegen, befinden sich die Schwenkachsen für die Leitklappen L2 unmittelbar an der Innenkante der Dachöffnung 02. Auch die Leitklappen L2 können, abhängig von einer jeweiligen Fahrtrichtung, derart eingestellt werden, dass die Dachöffnung O2je nach Bedarf als Ansaug- oder Auslassöffnung dient.

In beiden Ausführungsbeispielen für die Gestaltung einer Dachöffnung nach den Figuren 2 und 3 zeigen die Leitklappen L1, L2 eine gekrümmte oder in kleinen Winkeln facettierte Kontur hin zur Einlassöffnung O1, 02. Ausblasseitig ergibt sich eine hervorstehende Kontur, in die das Leitgitter G eingefasst ist, oder, fall es der Bauraum nicht zulässt, eine zunächst leicht nach innen gezogene Kontur, der die hervorstehende Kontur folgt und die symmetrisch in beide Fahrtrichtungen ausgeprägt oder je nach Fahrtrichtung einstellbar ist.

## Patentansprüche

1. Schienenfahrzeug mit wenigstens einer Komponente (K), welche zu Kühlzwecken von einem mit Hilfe mindestens einer Fördereinrichtung, wie einem Lüfter (L) oder Spoiler, geförderten Kühlluftmassenstrom angeströmt ist, für den ein Nennwert vorbestimmt ist, der für eine angenommene maximale thermische Belastung der mindestens einen Komponente (K) eine für deren Betrieb ausreichende Kühlwirkung bereit stellt, wobei die Komponente (K) von einem zu kühlenden Umrichter oder Transformator des Schienenfahrzeugs gebildet ist,
**dadurch gekennzeichnet, dass**
eine Steuervorrichtung (S) zum Steuern einer Stärke des Kühlluftmassenstroms vorgesehen und derart ausgebildet ist, dass der Kühlluftmassenstrom unterhalb einer vorbestimmten Fahrgeschwindigkeit seinen vorbestimmten Nennwert annimmt und unter Berücksichtigung thermischer Anforderungen der Komponente (K) zumindest in einem oberen Fahrgeschwindigkeitsbereich so bemessen ist, dass eine Summe einer Aufnahmeleistung der wenigstens einen Komponente (K), der wenigstens einen Fördereinrichtung und eines auf die Förderung des Kühlluftmassenstroms entfallenden Anteils einer Traktionsleistung des Schienenfahrzeugs kleiner ist als eine Summe der Aufnahmeleistung der wenigstens einen Komponente (K),
der wenigstens einen Fördereinrichtung und eines auf die Förderung des Kühlluftmassenstroms mit seinem vorbestimmten Nennwert entfallenden Anteils einer Traktionsleistung des Schienenfahrzeugs.

2. Schienenfahrzeug nach Anspruch 1,
**dadurch gekennzeichnet, dass**
die Steuervorrichtung (S) auf eine Drehzahl eines als die wenigstens eine Fördereinrichtung dienenden Lüfters (L) einwirkt.

3. Schienenfahrzeug nach Anspruch 2,
**dadurch gekennzeichnet, dass**
mehrere Lüfter (L) vorgesehen sind und die Steuervorrichtung (S) bei Bedarf wenigstens einen der Lüfter (L) zu- oder abschaltet.

4. Schienenfahrzeug nach Anspruch 2,
**dadurch gekennzeichnet, dass**
Schaufelblätter des wenigstens einen Lüfters (L) in ihrer Anstellung einstellbar sind und die Steuervorrichtung (S) zum Einstellen des Kühlluftmassenstroms auf die Anstellung der Schaufelblätter einwirkt.

5. Schienenfahrzeug nach Anspruch 1,
**dadurch gekennzeichnet, dass**
im strömungsweg für den Kühlluftmassenstrom eine Drosselklappe vorgesehen ist und die Steuervorrichtung (S) zur Einstellung des Kühlluftmassenstroms auf die Drosselklappe einwirkt.

6. Schienenfahrzeug nach einem der Ansprüche 1 bis 5,
**dadurch gekennzeichnet, dass**
mehrere zu kühlende Komponenten (K) vorgesehen sind.

7. Schienenfahrzeug nach einem der Ansprüche 1 bis 6,
**dadurch gekennzeichnet, dass**
der Steuervorrichtung (S) wenigstens eine Betriebsgröße des Schienenfahrzeugs signalisiert ist, die aus der Gruppe ausgewählt ist, die eine Fahrgeschwindigkeit, eine Leistungsaufnahme der wenigstens einen Komponente (K), eine thermische Belastung der wenigstens einen Komponente (K), eine Leistungsaufnahme des wenigstens einen Lüfters (L), eine Stärke des Kühlluftmassenstroms, eine Drehzahl des wenigstens einen Lüfters (L) und eine Traktionsleistung des Schienenfahrzeugs umfasst.

8. Schienenfahrzeug nach einem der Ansprüche 1 bis 7,
**dadurch gekennzeichnet, dass**
mehrere Lüfter (L) vorgesehen sind und der Steuervorrichtung (S) eine Anzahl an zu- oder abgeschalteten Lüftern (L) signalisiert ist.

9. Schienenfahrzeug nach einem der Ansprüche 1 bis 8,
**dadurch gekennzeichnet, dass**
die Steuervorrichtung (S) derart ausgebildet ist, dass unter Berücksichtigung thermischer Anforderungen der wenigstens einen Komponente (K) die Summe der Aufnahmeleistung der wenigstens einen Komponente (K), des wenigstens einen Lüfters (L) und des auf die Förderung des Kühlluftmassenstroms entfallenden Anteils der Traktionsleistung des Schienenfahrzeugs minimiert ist.

10. Schienenfahrzeug nach einem der Ansprüche 1 bis 9,
**dadurch gekennzeichnet, dass**
der Steuereinrichtung (S) aktuelle Messwerte für den Kühlluftmassenstrom oder für eine diesen wiedergebende Größe zu Regelzwecken signalisiert sind, so dass die Steuervorrichtung (S) als Regelvorrichtung arbeitet.

11. Schienenfahrzeug nach einem der Ansprüche 1 bis 10,
**dadurch gekennzeichnet, dass**
an einer Einsaugöffnung und/oder einer Ausblasöffnung (O1, O2) für den Kühlluftmassenstrom aerodynamische Elemente vorgesehen sind, welche die Förderung des Kühlluftmassenstroms unterstützen.

12. Schienenfahrzeug nach Anspruch 11,
**dadurch gekennzeichnet, dass**
die aerodynamischen Elemente von Leitklappen (L1, L2) gebildet sind, die in Längsrichtung des Schienenfahrzeugs hintereinander angebracht sind.

13. Schienenfahrzeug nach Anspruch 12,
**dadurch gekennzeichnet, dass**
die Leitklappen (L1, L2), bezogen auf das Schienenfahrzeug, jeweils um eine Querachse schwenkbar angebracht sind.

14. Schienenfahrzeug nach einem der Ansprüche 11 bis 13,
**dadurch gekennzeichnet, dass**
die Einsaugöffnung und/oder die Ausblasöffnung (O1, O2) mit einem Leitgitter (G) für den Kühlluftmassenstrom ausgestattet sind.

15. Verfahren zum Betrieb eines Schienenfahrzeugs,
bei dem wenigstens eine Komponente (K) des Schienenfahrzeugs, die von einem zu kühlenden Umrichter oder Transformator des Schienenfahrzeugs gebildet wird, zu Kühlzwecken von einem mit Hilfe mindestens einer Fördereinrichtung geförderten Kühlluftmassenstrom angeströmt wird, für den ein Nennwert vorbestimmt ist, der für eine angenommene maximale thermische Belastung der mindestens einen Komponente (K) eine für deren Betrieb ausreichende Kühlwirkung bereit stellt,
**dadurch gekennzeichnet, dass**
eine Stärke des Kühlluftmassenstroms derart gesteuert wird, dass der Kühlluftmassenstrom unterhalb einer vorbestimmten Fahrgeschwindigkeit seinen vorbestimmten Nennwert annimmt und unter Berücksichtigung thermischer Anforderungen der Komponente (K) zumindest in einem oberen Fahrgeschwindigkeitsbereich so bemessen ist, dass eine Summe einer Aufnahmeleistung der wenigstens einen Komponente (K), der wenigstens einen Fördereinrichtung und eines auf die Förderung des Kühlluftmassenstroms entfallenden Anteils einer Traktionsleistung des Schienenfahrzeugs kleiner ist als eine Summe der Aufnahmeleistung der wenigstens einen Komponente (K), der wenigstens Fördereinrichtung und eines auf die Förderung des Kühlluftmassenstroms mit seinem vorbestimmten Nennwert entfallenden Anteils einer Traktionsleistung des Schienenfahrzeugs.

16. Verfahren nach Anspruch 15,
bei dem
zum Einstellen des Kühlluftmassenstroms eine Drehzahl eines als die wenigstens eine Fördereinrichtung vorgesehenen Lüfters (L) gesteuert wird.

17. Verfahren nach Anspruch 16,
bei dem
mehrere Lüfter (L) vorgesehen werden und bei Bedarf wenigstens einer der Lüfter (L) zu- oder abgeschaltet wird.

18. Verfahren nach Anspruch 16,
bei dem
Schaufelblätter des wenigstens einen Lüfters (L) in ihrer Anstellung anstellbar ausgeführt werden und die Anstellung der Schaufelblätter zum Einstellen des Kühlluftmassenstroms gesteuert wird.

19. Verfahren nach Anspruch 15,
bei dem
im Strömungsweg für den Kühlluftmassenstrom eine Drosselklappe vorgesehen wird und zum Einstellen des Kühlluftmassenstroms die Drosselklappe gesteuert wird.

20. Verfahren nach einem der Ansprüche 15 bis 19,
bei dem
mehrere Komponenten (K) vorgesehen werden.

21. Verfahren nach einem der Ansprüche 15 bis 20,
bei dem
die Stärke des Kühlluftmassenstroms aufgrund von Messwerten für wenigstens eine Betriebsgröße des Schienenfahrzeugs gesteuert wird, die aus der Gruppe ausgewählt wird, die eine Fahrgeschwindigkeit, eine Leistungsaufnahme der wenigstens einen Komponente (K), eine thermische Belastung der wenigstens einen Komponente (K), eine Leistungsaufnahme des wenigstens einen Lüfters (L), eine Stärke des Kühlluftmassenstroms, eine Drehzahl des wenigstens einen Lüfters (L) und eine Traktionsleistung des Schienenfahrzeugs umfasst.

22. Verfahren nach Anspruch 17,
bei dem
mehrere Lüfter (L) vorgesehen werden und zur Steuerung des Kühlluftmassenstroms eine Anzahl an zu- oder abgeschalteten Lüftern (L) signalisiert wird.

23. Verfahren nach einem der Ansprüche 15 bis 22,
bei dem
der Kühlluftmassenstrom derart gesteuert wird, dass unter Berücksichtigung thermischer Anforderungen der Komponente (K) die Summe der Aufnahmeleistung der wenigstens einen Komponente (K), der wenigstens einen Fördereinrichtung und des auf die Förderung des Kühlluftmassenstroms entfallenden Anteils der Traktionsleistung des Schienenfahrzeugs minimiert wird.

## Claims

1. Rail vehicle having at least one component (K) which, for cooling purposes, is impinged on by a cooling air mass flow conveyed with the aid of at least one conveying device such as a fan (L) or spoiler, for which cooling air mass flow there is predetermined a nominal value which, for an assumed maximum thermal loading of the at least one component (K), provides a cooling action adequate for the operation thereof, wherein the component (K) is formed by a converter or transformer, which is to be cooled, of the rail vehicle,
**characterized in that**
a control device (S) for controlling an intensity of the cooling air mass flow is provided and designed such that the cooling air mass flow assumes its predetermined nominal value below a predetermined traveling speed and is dimensioned, taking into consideration thermal demands of the component (K) at least in an upper traveling speed range, such that a sum total of a power consumption of the at least one component (K), of the at least one conveying device and of a fraction of a traction power of the rail vehicle allotted to the conveying of the cooling air mass flow is lower than a sum total of the power consumption of the at least one component (K), of the at least one conveying device and of a fraction of a traction power of the rail vehicle allotted to the conveying of the cooling air mass flow with its predetermined nominal value.

2. Rail vehicle according to Claim 1,
**characterized in that**
the control device (S) acts on a rotational speed of a fan (L) which serves as the at least one conveying device.

3. Rail vehicle according to Claim 2,
**characterized in that**
a plurality of fans (L) is provided and the control device (S) activates or deactivates at least one of the fans (L) as required.

4. Rail vehicle according to Claim 2,
**characterized in that**
blades of the at least one fan (L) are adjustable in terms of their angle of incidence and the control device (S) acts, in order to adjust the cooling air mass flow, on the angle of incidence of the blades.

5. Rail vehicle according to Claim 1,
**characterized in that**
a throttle flap is provided in the flow path for the cooling air mass flow, and the control device (S) acts, in order to adjust the cooling air mass flow, on the throttle flap.

6. Rail vehicle according to one of Claims 1 to 5,
**characterized in that**
a plurality of components (K) to be cooled is provided.

7. Rail vehicle according to one of Claims 1 to 6,
**characterized in that**
at least one operating variable of the rail vehicle selected from the group comprising traveling speed, a power consumption of the at least one component (K), a thermal loading of the at least one component (K), a power consumption of the at least one fan (L), an intensity of the cooling air mass flow, a rotational speed of the at least one fan (L) and a traction power of the rail vehicle is signaled to the control device (S).

8. Rail vehicle according to one of Claims 1 to 7,
**characterized in that**
a plurality of fans (L) is provided and a number of activated or deactivated fans (L) is signaled to the control device (S).

9. Rail vehicle according to one of Claims 1 to 8,
**characterized in that**
the control device (S) is designed such that, taking into consideration thermal demands of the at least one component (K), the sum total of the power consumption of the at least one component (K), of the at least one fan (L) and of the fraction of the traction power of the rail vehicle allotted to the conveying of the cooling air mass flow is minimized.

10. Rail vehicle according to one of Claims 1 to 9,
**characterized in that**
current measurement values for the cooling air mass flow or for a variable reflecting said cooling air mass flow are signaled to the control device (S) for regulation purposes, such that the control device (S) operates as a regulating device.

11. Rail vehicle according to one of Claims 1 to 10,
**characterized in that**
aerodynamic elements which assist the conveying of the cooling air mass flow are provided on an intake opening and/or a discharge opening (01, 02) for the cooling air mass flow.

12. Rail vehicle according to Claim 11,
**characterized in that**
the aerodynamic elements are formed by guide flaps (L1, L2) which are mounted one behind the other in the longitudinal direction of the rail vehicle.

13. Rail vehicle according to Claim 12,
**characterized in that**
the guide flaps (L1, L2) are, in relation to the rail vehicle, mounted in each case so as to be pivotable about a transverse axis.

14. Rail vehicle according to one of Claims 11 to 13,
**characterized in that**
the intake opening and/or the discharge opening (01, 02) are/is equipped with a guide grate (G) for the cooling air mass flow.

15. Method for operating a rail vehicle,
in which at least one component (K) of the rail vehicle, which is formed by a converter or transformer, which is to be cooled, of the rail vehicle, is, for cooling purposes, impinged on by a cooling air mass flow conveyed with the aid of at least one conveying device, for which cooling air mass flow there is predetermined a nominal value which, for an assumed maximum thermal loading of the at least one component (K), provides a cooling action adequate for the operation thereof, **characterized in that** an intensity of the cooling air mass flow is controlled such that the cooling air mass flow assumes its predetermined nominal value below a predetermined traveling speed and is dimensioned, taking into consideration thermal demands of the component (K) at least in an upper traveling speed range, such that a sum total of a power consumption of the at least one component (K), of the at least one conveying device and of a fraction of a traction power of the vehicle allotted to the conveying of the cooling air mass flow is lower than a sum total of the power consumption of the at least one component (K), of the at least one conveying device and of a fraction of a traction power of the rail vehicle allotted to the conveying of the cooling air mass flow with its predetermined nominal value.

16. Method according to Claim 15,
in which,
for the adjustment of the cooling air mass flow, a rotational speed of a fan (L) which is provided as the at least one conveying device is controlled.

17. Method according to Claim 16,
in which
a plurality of fans (L) is provided and at least one of the fans (L) is activated or deactivated as required.

18. Method according to Claim 16,
in which
blades of the at least one fan (L) are adjustable in terms of their angle of incidence and the angle of incidence of the blades is controlled for the adjustment of the cooling air mass flow.

19. Method according to Claim 15,
in which
a throttle flap is provided in the flow path for the cooling air mass flow, and the throttle flap is controlled for the adjustment of the cooling air mass flow.

20. Method according to one of Claims 15 to 19,
in which
a plurality of components (K) is provided.

21. Method according to one of Claims 15 to 20,
in which
the intensity of the cooling air mass flow is controlled on the basis of measurement values for at least one operating variable of the vehicle selected from the group comprising traveling speed, a power consumption of the at least one component (K), a thermal loading of the at least one component (K), a power consumption of the at least one fan (L), an intensity of the cooling air mass flow, a rotational speed of the at least one fan (L) and a traction power of the rail vehicle.

22. Method according to Claim 17,
in which
a plurality of fans (L) is provided and, for the control of the cooling air mass flow, a number of activated or deactivated fans (L) is signaled.

23. Method according to one of Claims 15 to 22,
in which
the cooling air mass flow is controlled such that, taking into consideration thermal demands of the at least one component (K), the sum total of the power consumption of the at least one component (K), of the at least one conveying device and of the fraction of the traction power of the rail vehicle allotted to the conveying of the cooling air mass flow is minimized.

## Revendications

1. Véhicule ferroviaire ayant au moins un élément ( K ) sur lequel, à des fins de refroidissement, afflue, à l'aide d'au moins un dispositif de refoulement, comme un ventilateur ( L ) ou une jupe, un courant massique d'air de refroidissement pour lequel est définie à l'avance une valeur nominale qui, pour une charge thermique maximum supposée du au moins un élément ( K ), met à disposition un effet de refroidissement suffisant pour son fonctionnement, l'élément ( K ) étant formé d'un convertisseur ou d'un transformateur à refroidir du véhicule ferroviaire,
**caractérisé en ce que**
il est prévu et constitué un dispositif ( S ) de commande pour se rendre maître d'une intensité du courant massique d'air de refroidissement de manière à ce que le courant massique d'air de refroidissement prenne, en dessous d'une vitesse de marche définie à l'avance, sa valeur nominale définie à l'avance et soit proportionnée, en tenant compte des exigences thermiques de l'élément ( K ), au moins dans une plage de vitesse de marche supérieure de manière à ce qu'une somme d'une puissance absorbée du au moins un élément ( K ), du au moins un dispositif de refoulement et d'une proportion, revenant au refoulement du courant massique d'air de refroidissement, d'une puissance de traction du véhicule ferroviaire, soit plus petite qu'une somme de la puissance absorbée du au moins un élément ( K ), du au moins un dispositif de refoulement et d'une proportion, revenant au refoulement du courant massique d'air de refroidissement à sa valeur nominale définie à l'avance, d'une puissance de traction du véhicule ferroviaire.

2. Véhicule ferroviaire suivant la revendication 1,
**caractérisé en ce que**
le dispositif ( S ) de commande agit sur une vitesse de rotation d'un ventilateur ( L ) servant du au moins un dispositif de refoulement.

3. Véhicule ferroviaire suivant la revendication 2,
**caractérisé en ce que**
il est prévu plusieurs ventilateurs ( L ) et le dispositif ( S ) de commande met en marche ou met à l'arrêt au moins l'un des ventilateurs ( L ) en cas de besoin.

4. Véhicule ferroviaire suivant la revendication 2,
**caractérisé en ce que**
l'angle d'attaque des pales du au moins un ventilateur ( L ) est réglable et le dispositif ( S ) de commande agit sur l'angle d'attaque des pales pour régler le courant massique d'air de refroidissement.

5. Véhicule ferroviaire suivant la revendication 1,
**caractérisé en ce que**
il est prévu dans le trajet d'écoulement du courant massique d'air de refroidissement un volet d'étranglement et le dispositif ( S ) de commande agit sur le volet d'étranglement pour régler le courant massique d'air de refroidissement.

6. Véhicule ferroviaire suivant l'une des revendications 1 à 5,
**caractérisé en ce que**
il est prévu plusieurs éléments ( K ) à refroidir.

7. Véhicule ferroviaire suivant l'une des revendications 1 à 6,
**caractérisé en ce que**
il est signalé au dispositif ( S ) de commande au moins une grandeur de fonctionnement du véhicule ferroviaire, qui est choisie dans le groupe comprenant une vitesse de marche, une absorption de puissance du au moins un élément ( K ), une charge thermique du au moins un élément ( K ), une absorption de puissance du au moins un ventilateur ( L ), une intensité du courant massique d'air de refroidissement, une vitesse de rotation du au moins un ventilateur ( L ) et une puissance de traction du véhicule ferroviaire.

8. Véhicule ferroviaire suivant l'une des revendications 1 à 7,
**caractérisé en ce que**
il est prévu plusieurs ventilateurs ( L ) et il est signalé au dispositif ( S ) de commande un nombre de ventilateurs ( L ) en marche ou à l'arrêt.

9. Véhicule ferroviaire suivant l'une des revendications 1 à 8,
**caractérisé en ce que**
le dispositif ( S ) de commande est constitué de manière à ce qu'en tenant compte des exigences thermiques du au moins un élément ( K ), la somme de la puissance absorbée du au moins un élément ( K ), du au moins un ventilateur ( L ) et de la proportion, revenant au refoulement du courant massique d'air de refroidissement, de la puissance de traction du véhicule ferroviaire, soit minimisée.

10. Véhicule ferroviaire suivant l'une des revendications 1 à 9,
**caractérisé en ce que**
il est signalé à des fins de régulation au dispositif ( S ) de commande des valeurs de mesure présentes du courant massique d'air de refroidissement ou d'une grandeur le reproduisant de manière à ce que le dispositif ( S ) de commande travaille en dispositif de régulation.

11. Véhicule ferroviaire suivant l'une des revendications 1 à 10,
**caractérisé en ce que**
il est prévu sur une ouverture d'aspiration et/ou une ouverture ( 01, 02 ) d'insufflation du courant massique d'air de refroidissement des éléments aérodynamiques, qui assistent le refoulement du courant massique d'air de refroidissement.

12. Véhicule ferroviaire suivant la revendication 11, **caractérisé en ce que** les éléments aérodynamiques sont formés de volets ( L1, L2 ) de déviation, qui sont mis les uns derrières les autres dans la direction longitudinale du véhicule ferroviaire.

13. Véhicule ferroviaire suivant la revendication 12,
**caractérisé en ce que** les volets ( L1, L2 ) de déviation sont, rapportés au véhicule ferroviaire, montés pivotant respectivement autour d'un axe transversal.

14. Véhicule ferroviaire suivant l'une des revendications 11 à 13,
**caractérisé en ce que**
l'ouverture d'aspiration et/ou l'ouverture ( 01, 02 ) d'insufflation sont équipées d'une grille ( G ) dirigeant le courant massique d'air de refroidissement.

15. Procédé pour faire fonctionner un véhicule ferroviaire dans lequel on fait affluer sur un élément ( K ) du véhicule ferroviaire, qui est formé d'un convertisseur ou d'un transformateur à refroidir du véhicule ferroviaire, à des fins de refroidissement un courant massique d'air de refroidissement, qui est refoulé à l'aide d'au moins un dispositif de refoulement et pour lequel il est défini à l'avance une valeur nominale qui, pour une charge thermique maximum supposée du au moins un élément ( K ), met à disposition un effet de refroidissement suffisant pour son fonctionnement,
**caractérisé en ce que**
on se rend maître d'une intensité du courant massique d'air de refroidissement de manière à ce que le courant massique d'air de refroidissement prenne en dessous d'une vitesse de marche définie à l'avance sa valeur nominale définie à l'avance, et, en tenant compte des exigences thermiques de l'élément ( K ), soit proportionnée au moins dans une plage de vitesse de marche supérieure de manière à ce qu'une somme d'une puissance absorbée du au moins un élément ( K ), du au moins un dispositif de refoulement et d'une proportion, revenant au refoulement du courant massique d'air de refroidissement à sa valeur nominale définie à l'avance, d'une puissance de traction du véhicule ferroviaire.

16. Procédé suivant la revendication 15,
dans lequel
pour régler le courant massique d'air de refroidissement, on commande une vitesse de rotation d'un ventilateur ( L ) prévue comme au moins un dispositif de refoulement.

17. Procédé suivant la revendication 16,
dans lequel
il est prévu plusieurs ventilateurs ( L ) et au moins l'un des ventilateurs ( L ) est mis en fonctionnement ou à l'arrêt en cas de besoin.

18. Procédé suivant la revendication 16,
dans lequel
l'angle d'attaque des pales d'au moins un ventilateur ( L ) est réglable et pour régler le courant massique d'air de refroidissement, on commande l'angle d'attaque des pales.

19. Procédé suivant la revendication 15,
dans lequel
on prévoit dans le trajet d'écoulement du courant massique d'air de refroidissement un volet d'étranglement, et on commande le volet d'étranglement pour régler le courant massique d'air de refroidissement.

20. Procédé suivant l'une des revendications 15 à 19,
dans lequel
on prévoit plusieurs éléments ( K ).

21. Procédé suivant l'une des revendications 15 à 20,
dans lequel
on se rend maître de l'intensité du courant massique d'air de refroidissement sur la base de valeurs de mesure d'au moins une grandeur de fonctionnement du véhicule ferroviaire, qui est choisie dans le groupe comprenant une vitesse de marche, une absorption de puissance du au moins un élément ( K ), une charge thermique du au moins un élément ( K ), une absorption de puissance du au moins un ventilateur ( L ), une intensité du courant massique d'air de refroidissement, une vitesse de rotation du au moins un ventilateur ( L ) et une puissance de traction du véhicule ferroviaire.

22. Procédé suivant la revendication 17,
dans lequel
on prévoit plusieurs ventilateurs ( L ) et, pour commander le courant massique d'air de refroidissement, on signale un nombre de ventilateur ( L ) à mettre en marche ou à mettre à l'arrêt.

23. Procédé suivant l'une des revendications 15 à 22,
dans lequel
on se rend maître du courant massique d'air de refroidissement de manière à ce que, en tenant compte des exigences thermiques du au moins un élément ( K ), la somme de la puissance absorbée du au moins un élément ( K ), du au moins un ventilateur ( L ) et de la proportion, revenant au refoulement du courant massique d'air de refroidissement, de la puissance de traction du véhicule ferroviaire, soit minimisée.
